# EUROPEAN PATENT APPLICATION

(11) **EP 4 836 148 A1**
(43) Date of publication of application: **04.11.2026**
(21) Application number: 24927995.1
(22) Date of filing: 02.08.2024
(51) Int. Cl.: H01M 50/291, H01M 50/293, H01M 50/30

(54) **BATTERY AND ELECTRIC DEVICE**

(30) Priority: 07.03.2024 CN 202410264203
(71) Applicant: Contemporary Amperex Technology Co., Limited, Ningde, Fujian 352100 (CN)
(72) Inventor: WU, Kai, Ningde, Fujian 352100 (CN); KE, Jianhuang, Ningde, Fujian 352100 (CN); LI, Yao, Ningde, Fujian 352100 (CN)
(74) Representative: Ran, Handong
(86) International application number: PCT/CN2024/109648
(87) International publication number: WO 2025/185062

(57) **Abstract**

A battery and an electric device, relating to the technical field of batteries. The battery comprises a case, a battery cell and a treatment mechanism. The case forms an exhaust channel; the battery cell is accommodated in the case; the treatment mechanism forms a treatment channel and comprises at least one treatment module arranged at the treatment channel, the treatment channel is communicated with the exhaust channel and the external environment, and the treatment module is used for treating fumes flowing through the treatment channel.

## Description

### CROSS-REFERENCE TO RELATED APPLICATIONS

This application is based on and claims priority to Chinese Patent Application No. 202410264203.5, filed on March 7, 2024, the entire content of which is incorporated herein by reference.

### TECHNICAL FIELD

The present application relates to the field of battery technologies, and in particular, to a battery and an electrical apparatus.

### BACKGROUND

In a general power battery, in order to enable the battery to obtain sufficient power, a plurality of battery cells within a box body of the battery are typically arranged in a stacked manner. However, battery cells generate a large amount of heat during continuous charging and discharging use, leading to a rise in the internal temperature of the battery. Furthermore, the structure of stacked arrangement of the plurality of battery cells exacerbates this phenomenon.

When the internal temperature of the battery becomes abnormal, a thermal runaway phenomenon may occur. Battery thermal runaway generates a large amount of high-temperature flue gas. The usual solution for battery thermal runaway is to directly vent the thermal runaway flue gas out of the battery pack to stabilize the internal pressure of the battery. However, the high-temperature flue gas can easily ignite due to external ignition sources, causing deflagration or secondary damage, necessitating improvements.

### SUMMARY OF THE INVENTION

The present application provides a battery and an electrical apparatus to reduce the hazards of battery thermal runaway flue gas and improve the safety of the battery.

In a first aspect, an embodiment of the present application provides a battery. The battery includes a box body, a battery cell, and a treatment mechanism. The box body forms a venting channel. The battery cell is accommodated within the box body. The treatment mechanism forms a treatment channel and includes at least one treatment module provided at the treatment channel, where the treatment channel is in communication with the venting channel and an external environment, and the treatment module is configured to treat flue gas flowing through the treatment channel.

In the aforementioned technical solution, a treatment channel is provided between the venting channel and the external environment, where the treatment channel includes at least one treatment module for treating the flue gas, and the treatment module may have one or more functions among filtration, cooling, adsorption, and absorption. This allows, for different scenarios, realization of filtration of solid particles in the thermal runaway flue gas, condensation and/or absorption of liquid mist and combustible components in the thermal runaway flue gas, and cooling and condensation of the thermal runaway flue gas. Thereby, through multiple treatments of the thermal runaway flue gas, hazards of the thermal runaway flue gas are reduced, and safety of the battery is improved.

In some embodiments, the treatment module includes a first filtration module, the first filtration module including a plurality of partition plates disposed at intervals along an extension direction of the treatment channel.

In some embodiments, an inner wall of the treatment channel is provided with a storage groove, the storage groove being located on a side of the partition plate facing the venting channel.

In some embodiments, each of the partition plates is provided with a filtration hole, a flow area of the filtration hole being negatively correlated with a minimum distance from the partition plate where the filtration hole is located to the venting channel.

In some embodiments, the following is satisfied: 0.05 mm ≤ C1 ≤ 5 mm, where C1 is a diameter of the filtration hole of the partition plate farthest from the venting channel among the plurality of partition plates.

In some embodiments, any one of the partition plates has a side edge spaced apart from the inner wall of the treatment channel, so as to form a venting opening between the partition plate and the inner wall of the treatment channel, where a union of projections of the plurality of partition plates along the extension direction of the treatment channel covers the treatment channel.

In some embodiments, a union of projections of any two adjacent ones of the partition plates along the extension direction of the treatment channel covers the treatment channel;
and/or, projections of any two adjacent ones of the partition plates along the extension direction of the treatment channel have an intersection.

In some embodiments, an area of any one of the partition plates is greater than half of a cross-sectional area of the treatment channel in a region where the partition plate is located.

In some embodiments, the plurality of partition plates are divided into a plurality of groups, where a plurality of said partition plates within each group are disposed directly opposite along the extension direction of the treatment channel, the partition plates of different groups are disposed at intervals around a circumferential direction of the treatment channel, and the partition plates of different groups are disposed in a staggered manner along the extension direction of the treatment channel.

In some embodiments, the treatment module includes a second filtration module, the second filtration module including a dust collection bag.

In some embodiments, the dust collection bag is provided with a plurality of ventilation holes; and the following is satisfied: C2 ≤ 500 µm, where C2 is a diameter of the ventilation holes.

In some embodiments, the treatment module includes a cooling module, the cooling module including a heat exchanger capable of performing heat exchange with the flue gas within the treatment channel, where the heat exchanger is configured to circulate a heat exchange medium.

In some embodiments, one of the heat exchanger and the treatment channel includes a coil tube, and the coil tube is located inside the other of the heat exchanger and the treatment channel.

In some embodiments, the heat exchanger includes a plurality of sections of gas guide tubes and collecting tubes connected between the gas guide tube sections, a cross-sectional area of the collecting tubes being greater than a cross-sectional area of the gas guide tubes, and the heat exchanger is located within the treatment channel.

In some embodiments, the treatment module includes a cooling module, the cooling module including a water storage chamber provided on a top wall of the treatment channel, a bottom wall of the water storage chamber being provided with an opening mechanism, where the opening mechanism is configured to open under the condition that a pressure of the treatment channel reaches a target pressure and/or a temperature reaches a target temperature, and under the condition that the opening mechanism is open, water within the water storage chamber flows out into the treatment channel.

In some embodiments, the bottom wall of the water storage chamber is provided with a slit, and the opening mechanism includes a sealing member sealing the slit, the sealing member being configured to fail under the condition that the pressure of the treatment channel reaches the target pressure and/or the temperature reaches the target temperature;
or the bottom wall of the water storage chamber is provided with a weakened groove, and the opening mechanism includes a bottom wall of the weakened groove, the bottom wall of the weakened groove being configured to rupture under the condition that the pressure of the treatment channel reaches the target pressure and/or the temperature reaches the target temperature.

In some embodiments, the following is satisfied: L1 ≤ 5 mm, where L1 is a width of the slit or the weakened groove.

In some embodiments, a water inlet and a water outlet of the water storage chamber are both in communication with a liquid cooling system of the battery.

In some embodiments, the treatment module includes an adsorption module, the adsorption module being configured to adsorb liquid and/or combustible gas in the flue gas.

In some embodiments, the adsorption module includes an encapsulation layer and an adsorbent located within the encapsulation layer.

In some embodiments, the adsorbent includes a microporous adsorbent; and/or the adsorbent includes a chemical adsorbent.

In some embodiments, a plurality of said treatment modules are provided, the plurality of treatment modules being arranged at intervals sequentially along the treatment channel.

In some embodiments, the treatment modules include a first filtration module, a cooling module, and an adsorption module arranged sequentially along a direction from the venting channel to the external environment.

In some embodiments, the treatment modules include a first filtration module, a cooling module, an adsorption module, and a second filtration module arranged sequentially along a direction from the venting channel to the external environment, a filtration particle size of the second filtration module being smaller than a filtration particle size of the first filtration module.

In some embodiments, the treatment modules include a first cooling module, a second cooling module, and an adsorption module arranged sequentially along a direction from the venting channel to an external environment, a temperature of the second cooling module being lower than a temperature of the first cooling module.

In some embodiments, the treatment mechanism is installed within the box body; or the treatment mechanism is installed outside the box body.

In a second aspect, an embodiment of the present application provides an electrical apparatus, including the battery provided in any one of the aforementioned embodiments, the battery being configured to supply electrical energy to the electrical apparatus.

### BRIEF DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle provided in some embodiments of the present application;
FIG. 2 is an exploded structural diagram of a battery provided in some embodiments of the present application;
FIG. 3 is a schematic structural diagram of a treatment mechanism provided in some embodiments of the present application;
FIG. 4 is a first schematic structural diagram of a first filtration module provided in some embodiments of the present application;
FIG. 5 is a second schematic structural diagram of a first filtration module provided in some embodiments of the present application;
FIG. 6 is a third schematic structural diagram of a first filtration module provided in some embodiments of the present application;
FIG. 7 is a fourth schematic structural diagram of a first filtration module provided in some embodiments of the present application;
FIG. 8 is a first schematic structural diagram of a second filtration module provided in some embodiments of the present application;
FIG. 9 is a second schematic structural diagram of a second filtration module provided in some embodiments of the present application;
FIG. 10 is a first schematic structural diagram of a cooling module provided in some embodiments of the present application;
FIG. 11 is a second schematic structural diagram of a cooling module provided in some embodiments of the present application;
FIG. 12 is a third schematic structural diagram of a cooling module provided in some embodiments of the present application;
FIG. 13 is a fourth schematic structural diagram of a cooling module provided in some embodiments of the present application;
FIG. 14 is a top view of a second cooling module provided in some embodiments of the present application;
FIG. 15 is a cross-sectional view taken along line A-A in FIG. 14;
FIG. 16 is a first partial enlarged diagram of part B in FIG. 15;
FIG. 17 is a second partial enlarged diagram of part B in FIG. 15; and
FIG. 18 is a third partial enlarged diagram of part B in FIG. 15.

Reference numerals:
vehicle-1, battery-10, box body-11, first box main body-111, second box main body-112, battery cell-12, treatment mechanism-13;
first filtration module-131, partition plate-1311, filtration hole-13111, storage groove-1312;
second filtration module-132, dust collection bag-1321, ventilation hole-1322;
first cooling module-133, heat exchanger-1331, gas guide tube-13311, collecting tube-13312;
second cooling module-134, water storage chamber-1341, water inlet-13411, water outlet-13412, slit-1343, weakened groove-1344, sealing film-13441, filler-13442;
adsorption module-135, treatment channel-136, motor-20, controller-30.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the present application, the term "a plurality of" refers to more than two (including two), similarly, "a plurality of groups" refers to more than two groups (including two groups), and "a plurality of pieces" refers to more than two pieces (including two pieces).

A battery cell mentioned in the embodiments of the present application may include a lithium ion secondary battery, a lithium ion primary battery, a lithium sulfur battery, a sodium/lithium ion battery, a sodium ion battery or a magnesium ion battery and so on, which will not be limited in the embodiments of the present application. The battery cell may be in a cylindrical shape, a flat shape, a cuboid shape or another shape, which is not limited in the embodiments of the present application either. The battery cells are generally classified into three types depending on the way of encapsulation: cylindrical battery cells, square battery cells and pouch battery cells, which are also not limited in the embodiments of the present application.

The battery mentioned in the embodiments of the present application refers to a single physical module comprising one or more battery cells to provide higher voltage and capacity. For example, the battery mentioned in the present application may include a battery module, a battery pack, or the like. The battery generally includes a box body for packaging one or more battery cells or a plurality of battery modules. The box body can prevent liquid or other foreign matters from affecting charging or discharging of the battery cells.

The battery cell includes a shell, an electrode assembly, and an electrolyte, where the shell is used to accommodate the electrode assembly and the electrolyte. The electrode assembly consists of a positive electrode plate, a negative electrode plate, and a separator. The battery cell operates mainly relying on movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are a plurality of positive tabs which are stacked together, and there are a plurality of negative tabs which are stacked together.

The separator may be of a material such as polypropylene (PP) or polyethylene (PE). In addition, the electrode assembly may have a wound structure or a stacked structure, but the embodiments of the present application are not limited thereto.

In recent years, new energy vehicles have made a leap forward in development. In the field of electric vehicles, power batteries, as power sources of electric vehicles, play an irreplaceable and important role. The battery consists of a box body and a plurality of battery cells accommodated within the box body. As a core component of new energy vehicles, the battery must meet high requirements in terms of both safety and cycle lifespan.

In a general power battery, in order to enable the battery to obtain sufficient power, a plurality of battery cells within a box body of the battery are typically arranged in a stacked manner. However, battery cells generate a large amount of heat during continuous charging and discharging use, leading to a rise in the internal temperature of the battery. Furthermore, the structure of stacked arrangement of the plurality of battery cells exacerbates this phenomenon. The inventors have found that when the internal temperature of the battery becomes abnormal, a thermal runaway phenomenon may occur. Battery thermal runaway generates a large amount of high-temperature flue gas. The usual solution for battery thermal runaway is to directly vent the thermal runaway flue gas out of the battery pack to stabilize the internal pressure of the battery. However, the high-temperature flue gas can easily ignite due to external ignition sources, causing deflagration or secondary damage, such as personnel injury, combustion of external combustibles, or damage to adjacent vehicles, etc., which can easily cause panic and make firefighting operations highly difficult.

Based on the above considerations, to better handle the large amount of high-temperature flue gas generated during battery thermal runaway, the inventors, after in-depth research, have designed a battery and an electrical apparatus. The battery includes a box body, a battery cell, and a treatment mechanism. The box body forms a venting channel. The battery cell is accommodated within the box body. The treatment mechanism forms a treatment channel and includes at least one treatment module provided at the treatment channel, where the treatment channel is in communication with the venting channel and an external environment, and the treatment module is configured to treat flue gas flowing through the treatment channel.

In a battery with this structure, a treatment mechanism is provided between the venting channel and the external environment, where the treatment mechanism can treat the flue gas flowing through the treatment channel. In this way, when a large amount of high-temperature flue gas generated during battery thermal runaway flows from the venting channel into the treatment channel, it is treated by the at least one treatment module at the treatment channel, and after treatment, the high-temperature flue gas is discharged from the battery. Compared to the method of directly discharging the high-temperature flue gas from the battery, the present application can significantly improve the safety of the battery and can stabilize the internal pressure of the battery.

The battery disclosed in the embodiments of the present application can be used, but not limited to, in an electrical apparatus, such as a vehicle, a ship, or an aircraft. The battery disclosed in the present application may be used to form a power source system of the electrical apparatus.

An embodiment of the present application provides an electrical apparatus in which a battery is used as a power source. The electrical apparatus may be, but is not limited to, a mobile phone, a tablet, a laptop computer, an electric toy, an electric tool, a storage battery car, an electric vehicle, a ship, a spacecraft, and the like. The electric toy may include a fixed or mobile electric toy, such as a game machine, an electric vehicle toy, an electric ship toy, an electric airplane toy, and the like. The spacecraft may include an airplane, a rocket, a space shuttle, a spaceship, and the like.

For ease of description, the following embodiments are illustrated when the electrical apparatus in an embodiment of the present application is, for example, a vehicle.

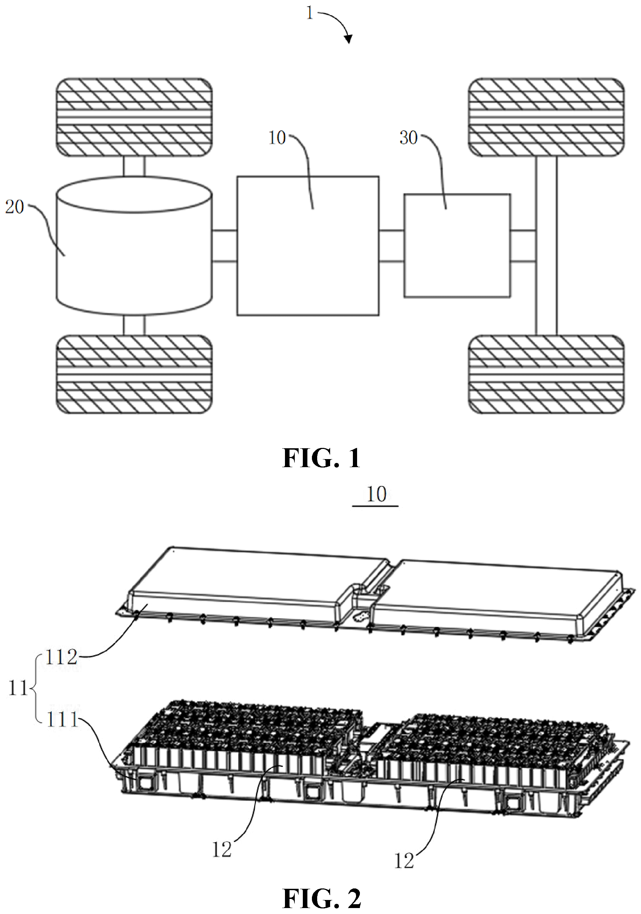

FIG. 1 is a schematic structural diagram of a vehicle 1 according to an embodiment of the present application. The vehicle 1 may be a fuel vehicle, a gas vehicle or a new energy vehicle, and the new energy vehicle may be an all-electric vehicle, a hybrid electric vehicle, an extended range electric vehicle, etc. A motor 20, a controller 30, and a battery 10 may be disposed inside the vehicle 1, where the controller 30 is configured to control the battery 10 to supply power to the motor 20. For example, the battery 10 may be disposed at the bottom or the head or the tail of the vehicle 1. The battery 10 may be configured to supply power to the vehicle 1. For example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can serve not only as an operating power supply for the vehicle 1, but also as a driving power source for the vehicle 1, so as to replace or partially replace fuel or natural air to provide driving power for the vehicle 1.

In order to meet different power usage requirements, the battery 10 may include a plurality of battery cells 12, where the plurality of battery cells 12 may be in series connection, parallel connection or series-parallel connection. The series-parallel connection refers to a combination of series connection and parallel connection.

As shown in FIG. 2, it is an exploded structural diagram of a battery 10 according to an embodiment of the present application. The battery 10 includes a box body 11 and a plurality of battery cells 12, where the battery cells 12 are configured to be accommodated in the box body 11. Here, the box body 11 is configured to provide an assembly space for the battery cells 12, and the box body 11 may be of various structures. In some embodiments, the box body 11 may include a first box main body 111 and a second box main body 112. The first box main body 111 and the second box main body 112 cover each other, and the first box main body 111 and the second box main body 112 together define an assembly space for accommodating the battery cell 12. The second box main body 112 may be a hollow structure open at one end, and the first box main body 111 may be a plate-shaped structure. The first box main body 111 covers an open side of the second box main body 112, such that the first box main body 111 and the second box main body 112 together define the assembly space. Alternatively, the first box main body 111 and the second box main body 112 may both be hollow structures open on one side, with an open side of the first box main body 111 covering an open side of the second box main body 112. Certainly, the box body 11 formed by the first box main body 111 and the second box main body 112 may have various shapes, such as a cylinder, a rectangular parallelepiped, etc.

In the battery 10, the plurality of battery cells 12 may be connected in series or in parallel or be in parallel-series connection. The parallel-series connection means that the plurality of battery cells 12 are connected in both series and parallel. A plurality of battery cells 12 may be directly connected together in series, parallel, or series-parallel connection, and then the entirety constituted by the plurality of battery cells 12 is accommodated within the box body 11. Certainly, the battery 10 can also be formed by first connecting a plurality of battery cells 12 in series, in parallel, or in series-parallel connection to constitute battery 10 modules, and then connecting a plurality of battery 10 modules in series, in parallel, or in series-parallel connection to form an entirety, which is accommodated within the box body 11. The battery 10 may further include other structures. For example, the battery 10 may further include a busbar component configured to achieve electrical connections between the plurality of battery cells 12.

Each battery cell 12 may be a secondary battery or a primary battery; or it may be a lithiumsulfur battery, a sodium-ion battery or a magnesium-ion battery, but is not limited thereto. The battery cells 12 may be cylindrical, flat, rectangular, or in other shapes.

During continuous charging and discharging use, the battery cell 12 generates a large amount of heat. When thermal runaway occurs in the battery cell 12, a large amount of flue gas is generated. The flue gas is discharged from the box body 11 through the venting channel to reduce the pressure inside the box body 11, thereby avoiding explosion of the battery 10.

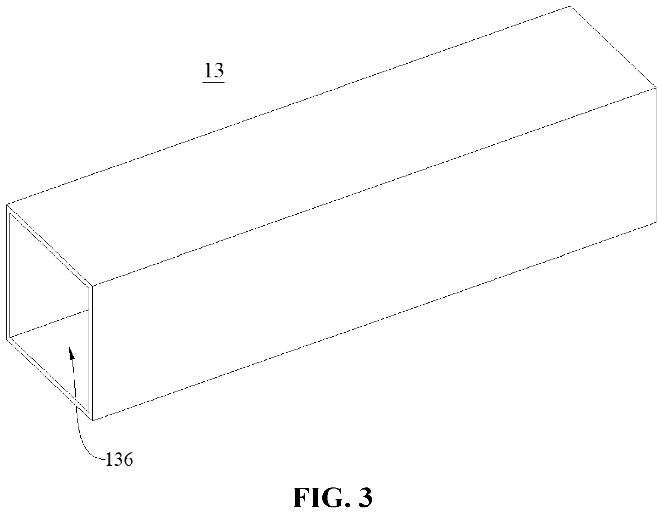

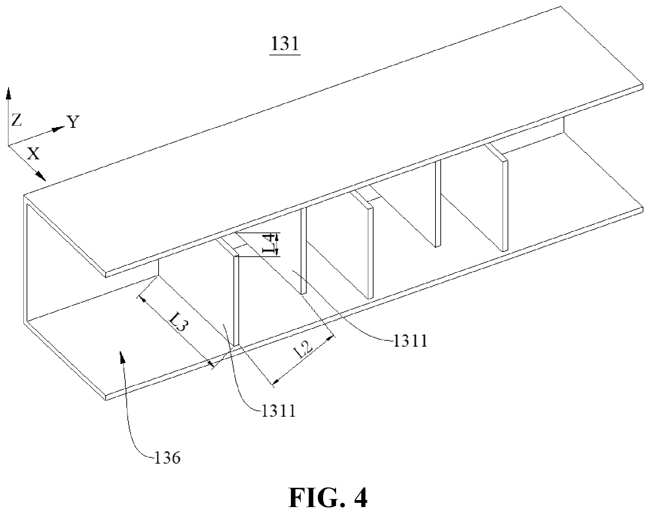

According to some embodiments of the present application, reference is made to FIG. 3 and further to FIG. 4. FIG. 3 is a schematic structural diagram of a treatment mechanism 13 provided in some embodiments of the present application. The present application provides a battery 10. The battery 10 includes a box body 11, a battery cell 12, and a treatment mechanism 13. The box body 11 forms a venting channel. The battery cell 12 is accommodated within the box body 11. The treatment mechanism 13 forms a treatment channel 136 and includes at least one treatment module provided at the treatment channel 136, where the treatment channel 136 is in communication with the venting channel and an external environment, and the treatment module is configured to treat flue gas flowing through the treatment channel 136.

The treatment mechanism 13 is disposed between the venting channel and the external environment. Thermal runaway flue gas sequentially flows through the venting channel and the treatment channel 136 to be discharged into the external environment. At least one treatment module is provided within the treatment channel 136, where the at least one treatment module is configured to treat the thermal runaway flue gas flowing through the treatment channel 136 to reduce hazards of the thermal runaway flue gas.

The treatment mechanism 13 is a non-powered component, which can perform its treatment function without relying on external inputs such as a power source. The treatment mechanism 13 can passively execute the flue gas treatment function when a large amount of flue gas is generated due to thermal runaway of the battery 10.

According to the battery 10 provided in the embodiments of the present application, the treatment channel 136 is provided between the venting channel and the external environment, where the treatment channel 136 includes at least one treatment module for treating the flue gas, and the treatment module may have one or more functions among filtration, cooling, adsorption, and absorption. This allows realization of filtration of solid particles in the thermal runaway flue gas, condensation and/or absorption of liquid mist and combustible components in the thermal runaway flue gas, and cooling and condensation of the thermal runaway flue gas. Thereby, through multiple treatments of the thermal runaway flue gas, hazards of the thermal runaway flue gas are reduced, and safety of the battery 10 is improved.

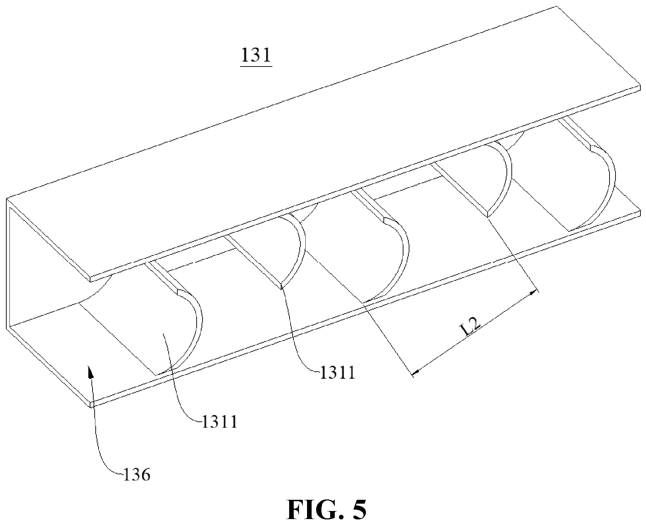

According to some embodiments of the present application, reference is made to FIG. 4 and further to FIG. 5. The treatment module includes a first filtration module 131, the first filtration module 131 including a plurality of partition plates 1311 disposed at intervals along an extension direction of the treatment channel 136.

The partition plate 1311 forms an angle with a flow direction of the flue gas. For example, the partition plate 1311 is perpendicular to or forms an acute angle with the flow direction of the flue gas, thereby decelerating the flue gas. Furthermore, during the deceleration process, solid particles in the flue gas collide with the partition plate 1311, and the solid particles in the flue gas undergo a degree of gas-solid separation due to gravity, so as to achieve interception of solid particles in the flue gas, thereby reducing the content of solid particles in the flue gas, and consequently lowering secondary hazards caused by the thermal runaway flue gas.

The number, size, and shape of the partition plates 1311 and the spacing distance between adjacent partition plates 1311 can be correspondingly set according to the extension length of the treatment channel 136 and the flue gas flow velocity.

In this embodiment, there is a spacing between at least one side of the partition plate 1311 and an inner wall of the treatment channel 136, or the partition plate 1311 is provided with holes, such that the flue gas can flow along the treatment channel 136.

According to some embodiments of the present application, reference is made to FIG. 4 and further to FIG. 5. Any one of the partition plates 1311 has a side edge spaced apart from the inner wall of the treatment channel 136, so as to form a venting opening between the partition plate 1311 and the inner wall of the treatment channel 136, where a union of projections of the plurality of partition plates 1311 along the extension direction of the treatment channel 136 covers the treatment channel 136.

Any one of the partition plates 1311 has at least one side edge spaced apart from the inner wall of the treatment channel 136. For example, one side edge, two adjacent side edges, two opposite side edges, or three adjacent side edges of the partition plate 1311 may be spaced apart from the inner wall of the treatment channel 136. That is, at least a portion of any one of the partition plates 1311 is spaced apart from the inner wall of the treatment channel 136 to form the venting opening, such that the treatment channel 136 is unobstructed, thereby allowing the flue gas to flow through.

Here, the union of the projections of the plurality of partition plates 1311 along the extension direction of the treatment channel 136 covers the treatment channel 136, meaning that the venting openings formed by the plurality of partition plates 1311 are not distributed in a straight line. This ensures that, during the flow process, the flue gas can at least be intercepted by one partition plate 1311 and thus has its flow path changed. Solid particles in the flue gas collide with the partition plate 1311 and separate from the gas flow, thereby reducing the content of solid particles in the flue gas. Consequently, this can reduce the risk of external fires caused by high-temperature particles being directly ejected from the battery 10 or secondary disasters caused by damaging the insulation protection within the entire pack.

In this embodiment, the plurality of partition plates 1311 may be arranged in a staggered manner, either up and down or left and right. For example, a preceding venting opening is located at an upper side of the treatment channel 136, and a subsequent venting opening is located at a lower part of the treatment channel 136. Alternatively, a preceding venting opening is located on a left side of the treatment channel 136, and a subsequent venting opening is located on a right side of the treatment channel 136. That is, the plurality of venting openings are distributed in a staggered manner along the extension direction of the treatment channel 136. Thus, the flue gas can flow in a serpentine path along the plurality of venting openings arranged in a staggered manner, so as to provide a certain interception effect on the solid particles in the flue gas.

According to some embodiments of the present application, the area of any one of the partition plates 1311 is greater than half of the cross-sectional area of the treatment channel 136 in the region where that partition plate 1311 is located. That is, the area of the venting opening is less than half of the cross-sectional area of the treatment channel 136, which increases the length and curvature of the flow path of the flue gas and allows for multiple interceptions of the flue gas, thereby improving the interception effect.

The venting opening is formed between the partition plate 1311 and a wall surface of the treatment channel 136. The flow area S2 of the venting opening is not less than half of the flow area S1 at a channel between that partition plate 1311 and an adjacent partition plate 1311.

The plane where the flow area is located is perpendicular to the flow direction of the gas flow. A region of a single partition plate 1311 that does not cover the treatment channel 136 forms the venting opening.

As shown in FIG. 4, in this embodiment, the gas flow direction at the venting opening is the Y direction, and the flow area of the venting opening is the area of the XOZ plane perpendicular to the Y direction. The gas flow direction at the channel between that partition plate 1311 and the adjacent partition plate 1311 is the Z direction, and the flow area at the channel is the area of the XOY plane perpendicular to the Z direction.

The height L4 of the venting opening at any partition plate 1311 (the distance between that partition plate 1311 and the wall surface of the treatment channel 136 that is not connected to the partition plate 1311) is not less than half of a spacing distance between that partition plate 1311 and the adjacent partition plate 1311.

Herein, the height of the venting opening is in the Z direction, and that partition plate 1311 and the adjacent partition plate 1311 are distributed at intervals along the Y direction.

In some embodiments, as shown in FIG. 4, assuming that the extension direction of the treatment channel 136 is the Y direction, the plurality of partition plates 1311 are distributed at intervals along the Y direction, a vertical direction of a cross-section of the treatment channel 136 is the Z direction, a horizontal direction of the cross-section of the treatment channel 136 is the X direction, and the partition plates 1311 are arranged parallel to the cross-section of the treatment channel 136.

Here, the plurality of partition plates 1311 satisfy: S2 ≥ 0.5 * S1, S1 = L2 * L3, and S2 = L2 * L4, where S2 is the area of the venting opening; S1 is the flow area at the channel between adjacent partition plates; L2 is the distance between two adjacent partition plates 1311 along the extension direction of the treatment channel 136; L3 is the length of the partition plate 1311 in the X direction; and L4 is the height of the venting opening along the Z direction.

In this embodiment, by defining the area between two adjacent partition plates 1311 and the area of the venting opening, the probability of excessively high back pressure within the treatment channel 136 due to overly dense partition plates 1311, which could lead to poor gas flow performance, can be reduced, thereby improving the smoothness of the gas flow.

According to some embodiments of the present application, a union of projections of any two adjacent ones of the partition plates 1311 along the extension direction of the treatment channel 136 covers the treatment channel 136; and/or, projections of any two adjacent ones of the partition plates 1311 along the extension direction of the treatment channel 136 have an intersection.

In this embodiment, a relationship between projections of any two adjacent ones of the partition plates 1311 along the extension direction of the treatment channel 136 and the treatment channel 136 includes at least the following three types.

First, the union of the projections of any two adjacent ones of the partition plates 1311 along the extension direction of the treatment channel 136 covers the treatment channel 136.

In this embodiment, any two adjacent ones of the partition plates 1311 are distributed in a staggered manner, and the union of the projections is greater than or equal to the cross-sectional area of the treatment channel 136. That is, the venting openings formed by every two adjacent partition plates 1311 are distributed in a staggered manner to achieve an interception effect on the flue gas by each partition plate 1311. Consequently, the flue gas flow can sequentially flow in a serpentine path along the plurality of venting openings distributed in a staggered manner, thereby improving the interception effect.

Second, projections of any two adjacent ones of the partition plates 1311 along the extension direction of the treatment channel 136 have an intersection.

In this embodiment, along the extension direction of the treatment channel 136, the sum of the projection areas of two adjacent partition plates 1311 is greater than the cross-sectional area of the treatment channel 136, thereby reducing the area of the venting openings and prolonging the flow path of the flue gas from a preceding venting opening to a next adjacent venting opening. This increases the length and the curvature of the entire flow path of the flue gas, thereby enhancing the interception effect.

Third, a union of the projections of any two adjacent ones of the partition plates 1311 along the extension direction of the treatment channel 136 covers the treatment channel 136, and projections of any two adjacent ones of the partition plates 1311 along the extension direction of the treatment channel 136 have an intersection.

In this embodiment, the venting openings formed by any two adjacent ones of the partition plates 1311 are distributed in a staggered manner, and the flow path of the flue gas from a preceding venting opening to a next adjacent venting opening is prolonged. This further increases the length and the curvature of the entire flow path of the flue gas, thereby enhancing the interception effect.

In some embodiments, the plurality of partition plates 1311 are divided into a plurality of groups, where a plurality of partition plates 1311 within each group are disposed directly opposite along the extension direction of the treatment channel 136, the partition plates 1311 of different groups are disposed at intervals around a circumferential direction of the treatment channel 136, and the partition plates 1311 of different groups are disposed in a staggered manner along the extension direction of the treatment channel 136.

The plurality of groups of partition plates 1311 are distributed in a staggered manner, and the distribution positions of the plurality of partition plates 1311 in each group and the specifications of the partition plates 1311 are the same.

For example, the plurality of partition plates 1311 are divided into two groups distributed up and down, where an upper side edge of one group of partition plates 1311 is connected to a top wall of the treatment channel 136, and a lower side edge of the other group of partition plates 1311 is connected to a bottom wall of the treatment channel 136, and the plurality of venting openings form a serpentine flow path bending up and down. Alternatively, the plurality of partition plates 1311 are divided into two groups distributed left and right, where a left side edge of one group of partition plates 1311 is connected to a left side wall of the treatment channel 136, and a right side edge of the other group of partition plates 1311 is connected to a right side wall of the treatment channel 136, and the plurality of venting openings form a serpentine flow path bending left and right. Alternatively, the plurality of partition plates 1311 are divided into three groups distributed up, middle, and down. Alternatively, the plurality of partition plates 1311 are divided into three groups distributed left, middle, and right.

Herein, the shape of the partition plate 1311 at least has the following structures.

First, the partition plate 1311 is of a flat-plate type.

In this embodiment, as shown in FIG. 4, in the case where the partition plate 1311 is of the flat-plate type, the arrangement of the partition plates 1311 at intervals can change the flow direction of the flue gas. Solid particles following the flue gas separate from the gas flow due to collision with the partition plates 1311, thereby achieving effective interception of the solid particles.

Second, as shown in FIG. 5, the partition plate 1311 is arc-shaped, and the center of curvature of the partition plate 1311 is located on a side of the partition plate 1311 proximate to the venting channel.

In this embodiment, in the case where the partition plate 1311 is arc-shaped, the arrangement of the partition plates 1311 at intervals can cause solid particles to collide with the partition plates 1311 and separate from the gas flow, while simultaneously creating gas turbulence, thereby achieving settling of the solid particles.

Herein, the arc-shaped partition plates 1311 are disposed up and down in a staggered manner to cause the solid particles to settle along the extension direction of the partition plates 1311.

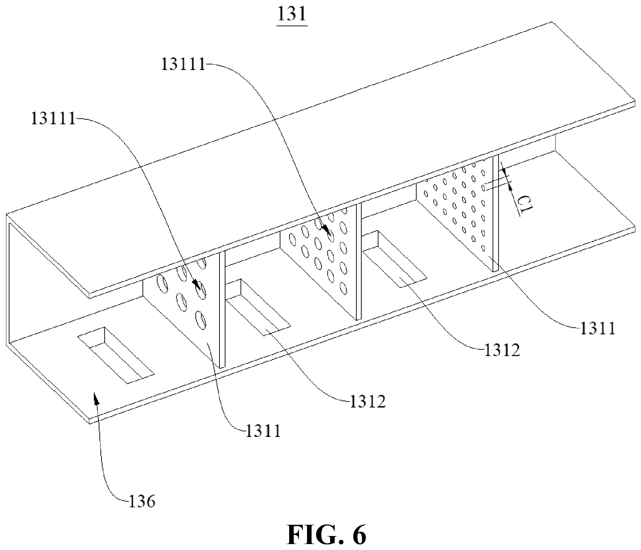

According to some embodiments of the present application, reference is made to FIG. 6. FIG. 6 is a schematic structural diagram of a first filtration module 131 provided in some embodiments of the present application. Each of the partition plates 1311 is provided with a filtration hole 13111, a flow area of the filtration hole 13111 being negatively correlated with a minimum distance from the partition plate 1311 where the filtration hole 13111 is located to the venting channel.

Herein, a circumferential side of the partition plate 1311 is connected to an inner wall of the treatment channel 136, such that the flue gas can only flow through the filtration hole 13111 on the partition plate 1311.

In this embodiment, when thermal runaway flue gas passes through the partition plate 1311, due to the design of the filtration hole 13111 on the partition plate 1311, only flue gas having an aperture smaller than that of the filtration hole 13111 is allowed to pass through, thereby reducing the content of solid particles in the flue gas. Furthermore, along a flow direction of the flue gas, the diameters of the filtration holes 13111 on each partition plate 1311 are arranged in a decreasing sequence. This descending order design enables graded filtration of solid particles in the flue gas according to the diameters of the filtration holes 13111, thereby improving the filtration efficiency, enhancing the protection effect on the partition plates 1311, and extending the service life.

In some embodiments, referring to FIG. 6, the following is satisfied: 0.05 mm ≤ C1 ≤ 5 mm, where C1 is a diameter of the filtration hole 13111 of the partition plate 1311 farthest from the venting channel among the plurality of partition plates 1311.

Herein, C1 may be 0.05 mm, 1 mm, 2 mm, 4 mm, or 5 mm, to reduce the content of particles in the thermal runaway flue gas.

In this embodiment, the filtration holes 13111 of the partition plates 1311 with larger distances from the venting channel among the plurality of partition plates 1311 have larger diameters, so as to enable graded filtration of the solid particles.

In some embodiments, the number of partition plates 1311 is plural, for example, 3, 5, or more, which may be specifically set according to the number of treatment channels 136.

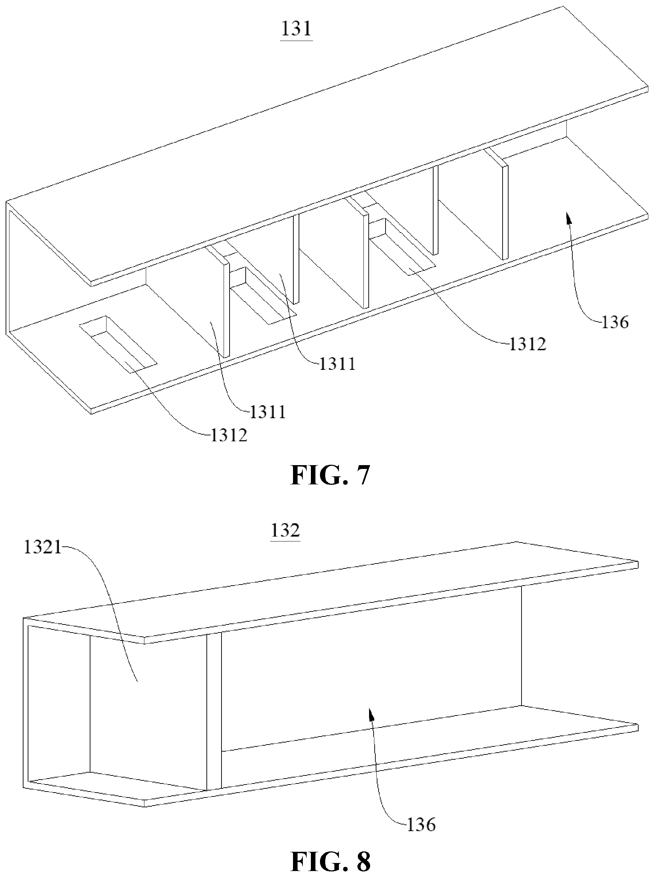

According to some embodiments of the present application, reference is made to FIG. 6 and FIG. 7. FIG. 6 and FIG. 7 are schematic structural diagrams of a first filtration module 131 provided in some embodiments of the present application. An inner wall of the treatment channel 136 is provided with a storage groove 1312, the storage groove 1312 being located on a side of the partition plate 1311 facing the venting channel.

Herein, the storage groove 1312 is located on the side of the partition plate 1311 proximate to the venting channel. During the flow process of the flue gas, solid particles in the flue gas collide with the partition plate 1311, and the solid particles in the flue gas fall due to gravity. The storage groove 1312 can collect the fallen solid particles, while reducing the quantity of settled solid particles carried away by gas flow disturbance, thereby improving interception efficiency.

According to some embodiments of the present application, the storage groove 1312 is suitable for application in a structure located at a bottom side edge of the partition plate 1311 and connected to the bottom wall of the treatment channel 136, so as to collect solid particles that fall after colliding with the partition plate 1311, which can reduce the quantity of solid particles within the storage groove 1312 carried away again by the airflow.

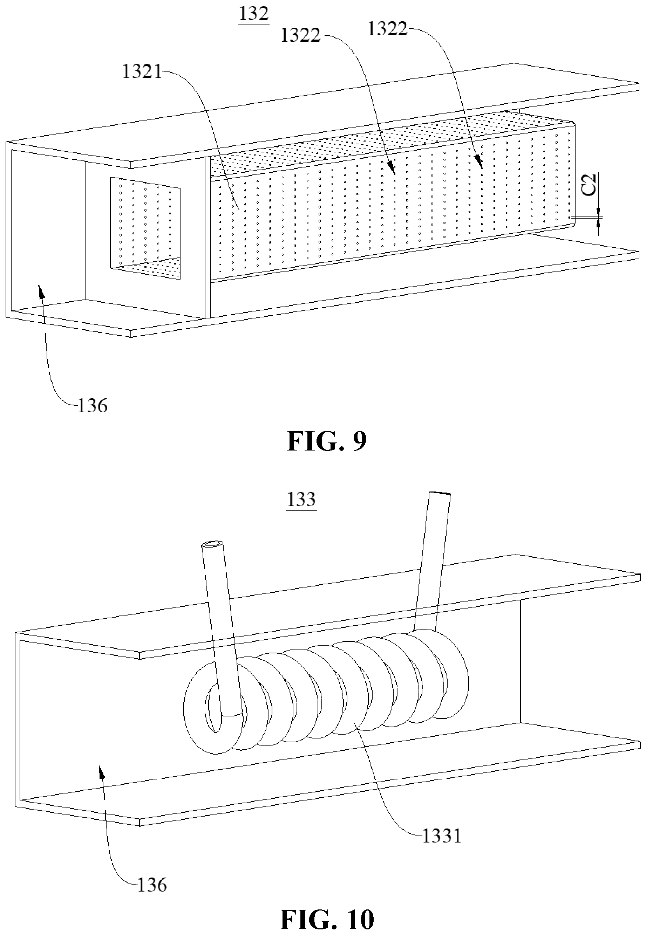

According to some embodiments of the present application, reference is made to FIG. 8 and further to FIG. 9. FIG. 8 and FIG. 9 are schematic structural diagrams of a second filtration module 132 provided in some embodiments of the present application. The treatment module includes a second filtration module 132, the second filtration module 132 including a dust collection bag 1321.

Herein, there are ventilation holes 1322 distributed on the dust collection bag 1321. A diameter of the ventilation holes 1322 on the dust collection bag 1321 of the second filtration module 132 is smaller than that of the filtration holes 13111 of the partition plates 1311 of the first filtration module 131, enabling more refined sieving treatment on solid particles in the flue gas.

When the second filtration module 132 is used in combination with the first filtration module 131, along a flow path of the flue gas, the second filtration module 132 is disposed behind the first filtration module 131.

The dust collection bag 1321 of the second filtration module 132 is in a compressed assembly form during normal operation of the battery 10, see FIG. 8. When thermal runaway occurs in the battery 10, the dust collection bag 1321 opens under the pressure of thermal runaway flue gas, see FIG. 9. The opened dust collection bag 1321 provides sieving functionality for fine particulate matter in the thermal runaway flue gas.

By providing the dust collection bag 1321 structure that opens under the pressure of thermal runaway flue gas, the second filtration module 132 can have a larger ventilation area, allowing the flue gas to have sufficient permeable points to penetrate the dust collection bag 1321, thereby reducing occurrences of blockage of solid particles, and reducing instances of air tightness failure or bursting caused by excessive internal pressure within the box body 11.

In some embodiments, the dust collection bag 1321 is provided with a plurality of ventilation holes 1322; and the following is satisfied: C2 ≤ 500 µm, where C2 is a diameter of the ventilation holes 1322.

Herein, C2 may be 50 µm, 100 µm, 250 µm, or 500 µm, so as to sieve fine particulate matter in the thermal runaway flue gas.

In some embodiments, C2 ≤ 50 µm. For example, C2 may be 10 µm, 20 µm, 35 µm, or 50 µm, so as to sieve fine particulate matter with smaller particle sizes in the thermal runaway flue gas.

According to some embodiments of the present application, the treatment module includes a cooling module, the cooling module at least including the following two structures.

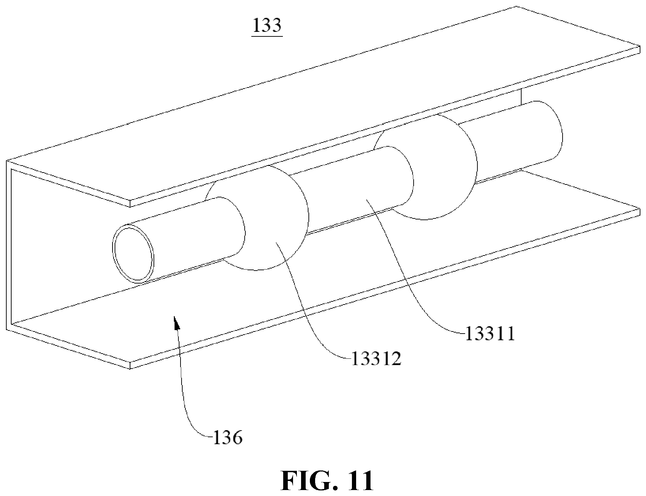

First, referring to FIG. 10 and FIG. 11, the cooling module includes a heat exchanger 1331 capable of performing heat exchange with flue gas within the treatment channel 136, where the heat exchanger 1331 is configured to circulate a heat exchange medium. Hereinafter, for ease of explanation, the cooling module in this structure is referred to as a first cooling module 133.

Herein, the treatment channel 136 is configured to circulate flue gas, and the heat exchanger 1331 is configured to circulate the heat exchange medium. The heat exchange medium is used for heat exchange with the flue gas, thereby functioning to cool down the high-temperature flue gas generated by thermal runaway.

According to some embodiments of the present application, referring to FIG. 10, one of the heat exchanger 1331 and the treatment channel 136 includes a coil tube, and the coil tube is located inside the other of the heat exchanger 1331 and the treatment channel 136.

As an example, the heat exchange medium may be water, or an ethylene glycol mixture, or the like.

Herein, the heat exchanger 1331 may be a tubular heat exchanger, a plate heat exchanger, or a spray-type heat exchanger, which is specifically selected according to the usage scenario.

The heat exchange medium may be set to be stationary, the flow direction of the heat exchange medium may be opposite to the flow direction of the thermal runaway flue gas, or an angle between the flow direction of the heat exchange medium and the flow direction of the thermal runaway flue gas may be >90°C, so as to improve the heat exchange efficiency.

The cooling module at least includes the following two structural solutions.

First, the coil tube is the heat exchanger 1331, and the coil tube is located within the treatment channel 136.

Herein, the coil tube is configured for the heat exchange medium to flow through, so as to achieve heat exchange between the coil tube and the treatment channel 136, lengthening the flow path of the heat exchange medium, thereby increasing the contact time between the thermal runaway flue gas and the heat exchange medium to achieve rapid cooling of the thermal runaway flue gas.

In this embodiment, by configuring the heat exchanger 1331 as a coil tube structure, the contact area between the thermal runaway flue gas and the cooling module directly can be increased, thereby enhancing the heat exchange efficiency of the thermal runaway flue gas.

Second, the treatment channel 136 is located inside the coil tube, and the coil tube is configured for the flue gas to flow through, where the coil tube is located within the heat exchanger 1331, and a medium channel is provided outside the coil tube.

For some systems in which the emission rate of thermal runaway flue gas is small, the treatment channel 136 can be provided inside the coil tube, meaning that the coil tube is configured for the high-temperature thermal runaway flue gas to flow through, and the heat exchange medium is provided outside the coil tube.

According to some embodiments of the present application, referring to FIG. 11, the heat exchanger 1331 includes a plurality of sections of gas guide tubes 13311 and collecting tubes 13312 connected between the gas guide tubes 13311, a cross-sectional area of the collecting tubes 13312 being greater than a cross-sectional area of the gas guide tubes 13311, and the heat exchanger 1331 is located within the treatment channel 136.

In this embodiment, in the collecting tube 13312 area, the flue gas has a decreased flow rate and thus can fully contact the heat exchange medium for the purpose of cooling. Part of the steam can condense and then be stored at the bottom of the collecting tube 13312 area, and will not be carried out by the flue gas, thereby achieving preliminary cooling treatment of the thermal runaway flue gas.

Herein, the collecting tubes 13312 and the gas guide tubes 13311 may be connected by connection methods such as integral forming, threaded connection, or welding. The collecting tube 13312 may be a rectangular tube, a cylindrical tube, or a spherical tube. The cross-sectional area of the collecting tube 13312 is greater than the cross-sectional area of the gas guide tube 13311.

The heat exchanger 1331, which is provided for the purpose of cooling or condensing the thermal runaway flue gas, is a heat transfer-type first cooling module 133.

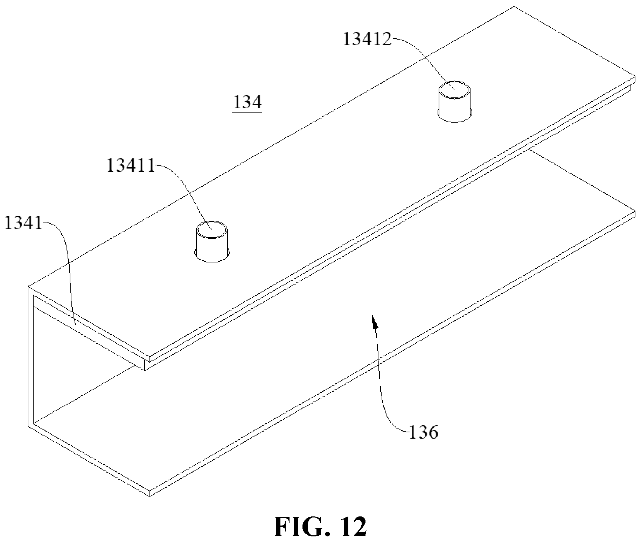

Second, referring to FIG. 12, FIG. 13, and FIG. 14, the cooling module includes a water storage chamber 1341 provided on a top wall of the treatment channel 136, a bottom wall of the water storage chamber 1341 being provided with an opening mechanism, where the opening mechanism is configured to open under the condition that a pressure of the treatment channel 136 reaches a target pressure and/or a temperature reaches a target temperature, and under the condition that the opening mechanism is open, water within the water storage chamber 1341 flows out into the treatment channel 136.

Hereinafter, for ease of explanation, the cooling module in this structure is referred to as a second cooling module 134. A temperature of the second cooling module 134 is lower than a temperature of the first cooling module 133. Through the second cooling module 134, components existing in the thermal runaway flue gas that may liquefy at the room temperature state can be treated and recovered in advance by means of condensation.

In this embodiment, when the pressure and temperature of the battery 10 are normal, the opening mechanism is closed, and the water storage chamber 1341 is not in communication with the treatment channel 136. Under the condition that the pressure of the treatment channel 136 reaches the target pressure and/or the temperature reaches the target temperature, the opening mechanism opens, the water storage chamber 1341 communicates with the treatment channel 136, and the water storage chamber 1341 flows a water curtain into the treatment channel 136, thereby cooling the high-temperature flue gas within the treatment channel 136 and settling solid particles in the flue gas.

It should be noted that water or other cooling media may be stored within the water storage chamber 1341. Under the condition that the temperature of the treatment channel 136 reaches the target temperature, the cooling medium in the water storage chamber 1341 thermally expands to drive the opening mechanism to open.

Herein, the opening mechanism may be at least in the following structures.

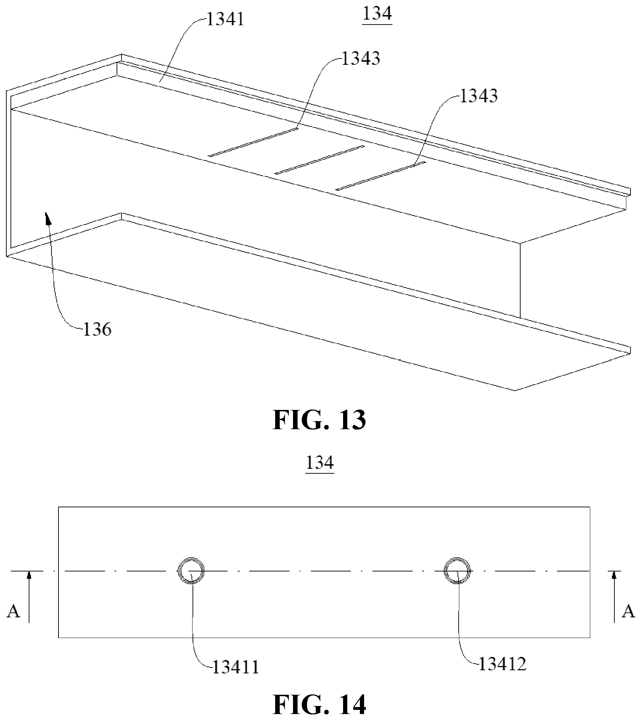

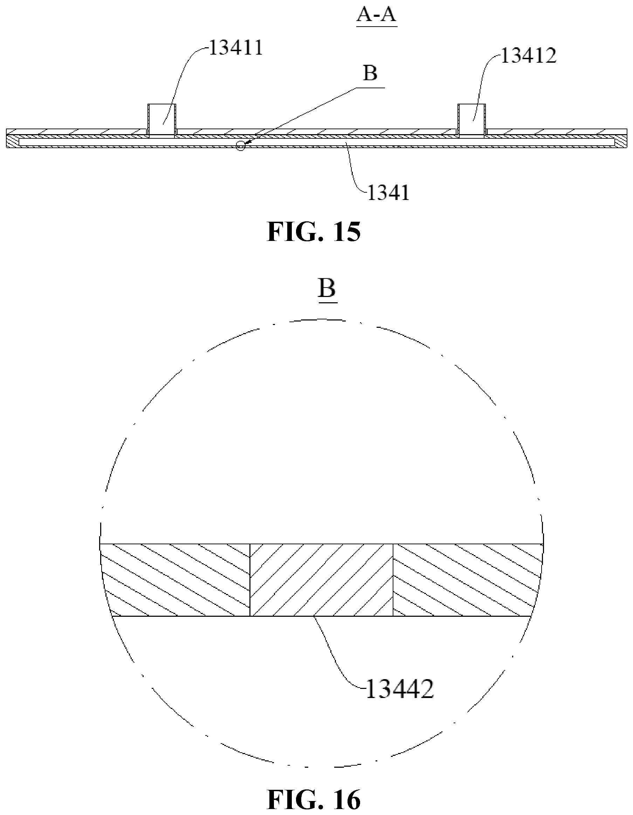

First, referring to FIG. 13 and FIG. 15, the bottom wall of the water storage chamber 1341 is provided with a slit 1343, and the opening mechanism includes a sealing member sealing the slit 1343, the sealing member being configured to fail under the condition that the pressure of the treatment channel 136 reaches the target pressure and/or the temperature reaches the target temperature.

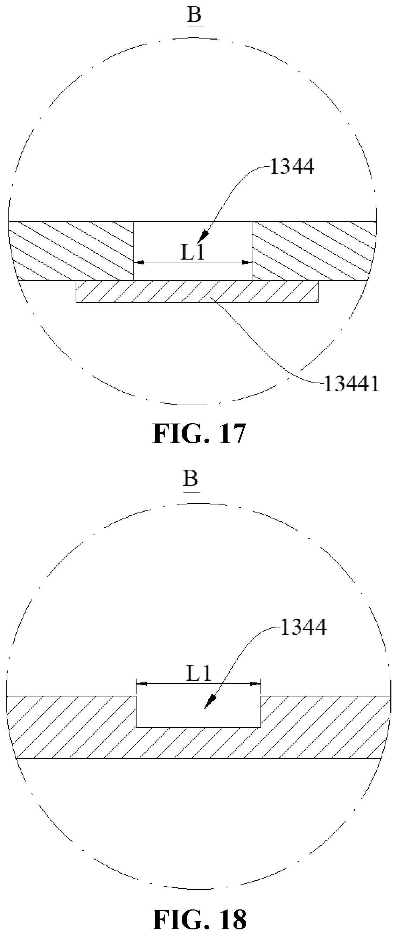

Herein, the sealing member may be a sealing film 13441 or a filler 13442. Referring to FIG. 16, the filler 13442 may be a rubber material such as silicone rubber or fluororubber, or may be a structural part formed by injection molding with polymer plastic. Referring to FIG. 17, the sealing film 13441 may be a polymer plastic film such as polypropylene or polyimide, and the filler 13442 and the sealing film 13441 may rupture under a certain pressure or temperature.

In some embodiments, the slit 1343 may include a plurality of slits. Extension directions of the plurality of slits 1343 are perpendicular to a flow direction of the flue gas. The plurality of slits 1343 are arranged at intervals along the flow direction of the flue gas to increase the cooling efficiency.

Second, referring to FIG. 15 and FIG. 18, the bottom wall of the water storage chamber 1341 is provided with a weakened groove 1344, and the opening mechanism includes a bottom wall of the weakened groove 1344, the bottom wall of the weakened groove 1344 being configured to rupture under the condition that the pressure of the treatment channel 136 reaches the target pressure and/or the temperature reaches the target temperature.

Herein, a thickness of the bottom wall of the weakened groove 1344 is less than that of other parts of the bottom wall of the water storage chamber 1341, and a structural strength of the bottom wall of the weakened groove 1344 is less than that of other parts of the bottom wall of the water storage chamber 1341, and thus the bottom wall of the weakened groove 1344 is more prone to rupture, such that under the condition that the pressure of the treatment channel 136 reaches the target pressure and/or the temperature reaches the target temperature, the weakened groove 1344 can rupture to allow the water curtain to flow out, thereby achieving rapid cooling or condensation of the thermal runaway flue gas.

In some embodiments, the following is satisfied: L1 ≤ 5 mm, where L1 is a width of the slit 1343 or the weakened groove 1344.

Herein, L1 may be 1 mm, 3 mm, or 5 mm, such that the water curtain flows out along the slit 1343 or the weakened groove 1344 and forms a water mist, thereby improving the contact effect with the thermal runaway flue gas.

In some embodiments, the following is satisfied: L1 ≤ 2 mm; for example, L1 may be 1 mm, 1.5 mm, or 2 mm, such that when the water curtain flows out along the slit 1343 or the weakened groove 1344, a water mist is better formed, thereby further improving the contact effect between the water mist and the thermal runaway flue gas.

The water curtain, which is provided for the purpose of cooling or condensing the thermal runaway flue gas, is a water curtain-type second cooling module 134.

In some embodiments, a water inlet 13411 and a water outlet 13412 of the water storage chamber 1341 are both in communication with a liquid cooling system of the battery 10, such that the water storage chamber 1341 can be replenished with liquid, enabling the water curtain to flow out continuously, thereby improving the effect of cooling and condensing the flue gas.

In some embodiments, the treatment module includes an adsorption module 135, the adsorption module 135 being configured to adsorb liquid and/or flammable gas in the flue gas, thereby reducing the content of liquid and/or flammable gas in the thermal runaway flue gas and reducing secondary disasters.

In some embodiments, the adsorption module 135 includes an encapsulation layer and an adsorbent located within the encapsulation layer.

Herein, the encapsulation layer is configured to encapsulate the adsorbent to improve the structural stability of the adsorbent, extend its service life, and reduce leakage or structural collapse of the adsorbent during the scouring process of the thermal runaway gas.

Here, a porous encapsulation sheet may be used for the encapsulation layer, thereby achieving the encapsulation effect while allowing normal flow of flue gas through pores on the porous encapsulation sheet.

The pore size of the porous encapsulation sheet may be set according to the particle size of the used absorption substance. The pore size of the porous encapsulation sheet needs to be smaller than the particle size of the used absorption substance, so as to reduce leakage of the absorption substance or ejection of the thermal runaway flue gas.

Herein, the encapsulation layer may be a metal sheet or a plastic sheet with certain structural strength and temperature resistance.

Herein, the absorption substance may be at least the following three materials.

First, the adsorbent includes a microporous adsorbent.

In this embodiment, the adsorption module 135 performs physical absorption on the flue gas, where the microporous adsorbent may be a material with a microporous structure, such as activated carbon, silica gel, or alumina balls, and the adsorption target is particles in the thermal runaway flue gas.

Second, the adsorbent includes a chemical adsorbent.

In this embodiment, the adsorption module 135 performs chemical absorption on the flue gas, where the chemical adsorbent may be a material that reacts chemically with certain substances in the thermal runaway flue gas or promotes chemical reactions of the treatment object, such as anhydrous calcium chloride, anhydrous magnesium sulfate, calcium oxide, or noble metal catalysts, so as to reduce flammable gas components in the thermal runaway flue gas.

Third, the adsorbent includes a microporous adsorbent and a chemical adsorbent.

In this embodiment, the adsorption module 135 performs physical absorption and chemical absorption on the flue gas, i.e., performing absorption and adsorption on the absorption targets in the thermal runaway flue gas, such as electrolyte vapor, water vapor, or volatile organic compound gases, so as to further reduce visible mist and flammable gas components in the thermal runaway flue gas.

In some embodiments, a plurality of treatment modules are provided, the plurality of treatment modules being arranged at intervals sequentially along the treatment channel 136, so as to perform multiple treatments on the thermal runaway flue gas, thereby improving the treatment effect.

Herein, the plurality of treatment modules may have the same functionality or may be a combination of different functional modules. Specific combination methods may be selected according to application scenarios to adapt to different battery scenarios.

Here, the plurality of treatment modules may have different functions, at least including the following multiple combination schemes.

First, the treatment module includes a first filtration module 131, a cooling module, and an adsorption module 135 arranged sequentially along a direction from the venting channel to the external environment.

This scheme is suitable for chemical systems with higher energy density, such as highnickel ternary lithium batteries. Thermal runaway in such batteries is more violent, with a higher gas generation rate and a higher temperature. The thermal runaway process may cause crushing of the electrode plates inside the battery, which is ejected with the airflow, resulting in the thermal runaway flue gas containing a large amount of black thermal runaway powder.

The first filtration module 131 primarily performs preliminary isolation treatment on particles with a particle size > 0.1 mm in the thermal runaway flue gas, reducing the particles in the thermal runaway flue gas while reducing blockage of subsequent treatment mechanisms 13 by large particles, thereby stabilizing the back pressure within the battery.

The cooling module may be the first cooling module 133 and/or the second cooling module 134, so as to cool the flue gas and perform preliminary adsorption and settling of fine particulate matter in the flue gas. The purpose of cooling is to improve the treatment efficiency of subsequent treatment modules and also reduce the risk of secondary disasters caused by high temperature during discharging of the flue gas.

After treatment by the first filtration module 131 and the cooling module, the content of solid particles in the flue gas is reduced to a relatively low level, which primarily consist of fine particulate matter with very small particle sizes, with the remaining visible part being electrolyte vapor or water vapor. Therefore, the adsorption module 135 mainly absorbs and catalytically reacts with the electrolyte vapor, water vapor, and flammable component gases in the remaining flue gas.

Second, the treatment module includes a first filtration module 131, a cooling module, an adsorption module 135, and a second filtration module 132 arranged sequentially along a direction from the venting channel to the outside, a filtration particle size of the second filtration module 132 being smaller than a filtration particle size of the first filtration module 131.

This scheme is suitable for products pursuing ultra-high treatment effects or for products with higher energy density and greater gas venting rates where complete removal of particles in the thermal runaway flue gas cannot be fully achieved by the first scheme. In this case, the second filtration module 132 can be added to the treatment mechanism 13. Through the microporous sieving of the dust collection bag 1321, the content of particles in the thermal runaway flue gas is further reduced, so as to further achieve a flue gas effect with no black smoke or no smoke.

Third, the treatment module includes a first cooling module 133, a second cooling module 134, and an adsorption module 135 arranged sequentially along a direction from the venting channel to an external environment, a temperature of the second cooling module 134 being lower than a temperature of the first cooling module 133.

This scheme is suitable for some chemical systems with lower energy density, such as lithium iron phosphate batteries, where the battery thermal runaway process is relatively mild, the gas generation rate is relatively low, and the runaway flue gas contains basically no solid electrode plates.

The first cooling module 133 primarily performs preliminary cooling on the thermal runaway flue gas, paving the way for the second cooling module 134 and improving the treatment efficiency of the second cooling module 134. Through the second cooling module 134, components existing in the thermal runaway flue gas that may liquefy at the room temperature state can be treated and recovered in advance by means of condensation.

The adsorption module 135 then absorbs and catalytically treats the incompletely condensed electrolyte vapor, water vapor, and flammable gas components in the thermal runaway flue gas, thereby reducing the hazard level of the thermal runaway flue gas.

In some embodiments, the treatment mechanism 13 is designed to be disposed on the thermal runaway flue gas emission path of the battery 10. For example, the treatment mechanism 13 may be installed within the box body 11; or, the treatment mechanism 13 may be installed outside the box body 11.

Herein, treatment modules with different functions may be integrated into different component locations of the battery 10 to improve the treatment effect on the thermal runaway flue gas.

When installed within the box body 11, the treatment mechanism 13 is disposed on the flue gas emission path inside the box body 11, for example, at a position before the electrical compartment enters a beam, within the beam, at the beam outlet, in a lower box body cavity, or in a whole-pack pressure relief mechanism. When installed outside the box body 11, the treatment mechanism 13 is installed at the end of the flue gas emission path, for example, in a connecting pipeline between the battery 10 and an external treatment mechanism, or within the external treatment mechanism.

Embodiments of the present application further provide an electrical apparatus, including the battery 10 according to any one of the aforementioned embodiments, the battery 10 being configured to supply electrical energy to the electrical apparatus.

Any one of the aforementioned batteries 10 has the treatment mechanism 13, which can perform one or more treatments among filtration, cooling, absorption, etc., on the thermal runaway flue gas of the battery 10, thereby reducing secondary hazards and personnel panic caused by the thermal runaway flue gas. The electrical apparatus having this battery 10 similarly has this effect, with higher safety.

It should be noted that the embodiments in the present application and features in the embodiments may be mutually combined in the case of no conflict.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery, comprising:
a box body, the box body forming a venting channel;
a battery cell, the battery cell being accommodated within the box body; and
a treatment mechanism, the treatment mechanism forming a treatment channel and comprising at least one treatment module provided at the treatment channel, wherein the treatment channel is in communication with the venting channel and an external environment, and the treatment module is configured to treat flue gas flowing through the treatment channel.

2. The battery according to claim 1, wherein the treatment module comprises a first filtration module, the first filtration module comprising a plurality of partition plates disposed at intervals along an extension direction of the treatment channel.

3. The battery according to claim 2, wherein an inner wall of the treatment channel is provided with a storage groove, the storage groove being located on a side of the partition plate facing the venting channel.

4. The battery according to claim 2 or 3, wherein each of the partition plates is provided with a filtration hole, a flow area of the filtration hole being negatively correlated with a minimum distance from the partition plate where the filtration hole is located to the venting channel.

5. The battery according to claim 4, wherein the following is satisfied: 0.05 mm ≤ C1 ≤ 5 mm, wherein C1 is a diameter of the filtration hole of the partition plate farthest from the venting channel among the plurality of partition plates.

6. The battery according to claim 2 or 3, wherein any one of the partition plates has a side edge spaced apart from the inner wall of the treatment channel, so as to form a venting opening between the partition plate and the inner wall of the treatment channel, wherein a union of projections of the plurality of partition plates along the extension direction of the treatment channel covers the treatment channel.

7. The battery according to claim 6, wherein:
a union of projections of any two adjacent ones of the partition plates along the extension direction of the treatment channel covers the treatment channel;
and/or, projections of any two adjacent ones of the partition plates along the extension direction of the treatment channel have an intersection.

8. The battery according to claim 6, wherein an area of any one of the partition plates is greater than half of a cross-sectional area of the treatment channel in a region where the partition plate is located.

9. The battery according to claim 6, wherein the plurality of partition plates are divided into a plurality of groups, wherein a plurality of said partition plates within each group are disposed directly opposite along the extension direction of the treatment channel, the partition plates of different groups are disposed at intervals around a circumferential direction of the treatment channel, and the partition plates of different groups are disposed in a staggered manner along the extension direction of the treatment channel.

10. The battery according to any one of claims 1-9, wherein the treatment module comprises a second filtration module, the second filtration module comprising a dust collection bag.

11. The battery according to claim 10, wherein the dust collection bag is provided with a plurality of ventilation holes; and the following is satisfied: $C 2 \leq 500 μm ,$ wherein C2 is a diameter of the ventilation holes.

12. The battery according to any one of claims 1-11, wherein the treatment module comprises a cooling module, the cooling module comprising a heat exchanger capable of performing heat exchange with the flue gas within the treatment channel, wherein the heat exchanger is configured to circulate a heat exchange medium.

13. The battery according to claim 12, wherein one of the heat exchanger and the treatment channel comprises a coil tube, and the coil tube is located inside the other of the heat exchanger and the treatment channel.

14. The battery according to claim 12, wherein the heat exchanger comprises a plurality of sections of gas guide tubes and collecting tubes connected between the gas guide tube sections, a cross-sectional area of the collecting tubes being greater than a cross-sectional area of the gas guide tubes, and the heat exchanger is located within the treatment channel.

15. The battery according to any one of claims 1-11, wherein the treatment module comprises a cooling module, the cooling module comprising a water storage chamber provided on a top wall of the treatment channel, a bottom wall of the water storage chamber being provided with an opening mechanism, wherein the opening mechanism is configured to open under the condition that a pressure of the treatment channel reaches a target pressure and/or a temperature reaches a target temperature, and under the condition that the opening mechanism is open, water within the water storage chamber flows out into the treatment channel.

16. The battery according to claim 15, wherein:
the bottom wall of the water storage chamber is provided with a slit, and the opening mechanism comprises a sealing member sealing the slit, the sealing member being configured to fail under the condition that the pressure of the treatment channel reaches the target pressure and/or the temperature reaches the target temperature; or
the bottom wall of the water storage chamber is provided with a weakened groove, and the opening mechanism comprises a bottom wall of the weakened groove, the bottom wall of the weakened groove being configured to rupture under the condition that the pressure of the treatment channel reaches the target pressure and/or the temperature reaches the target temperature.

17. The battery according to claim 15 or 16, wherein the following is satisfied: $L 1 \leq 5 mm ,$ wherein L1 is a width of the slit or the weakened groove.

18. The battery according to any one of claims 15-17, wherein a water inlet and a water outlet of the water storage chamber are both in communication with a liquid cooling system of the battery.

19. The battery according to any one of claims 1-18, wherein the treatment module comprises an adsorption module, the adsorption module being configured to adsorb liquid and/or combustible gas in the flue gas.

20. The battery according to claim 19, wherein the adsorption module comprises an encapsulation layer and an adsorbent located within the encapsulation layer.

21. The battery according to claim 20, wherein:
the adsorbent comprises a microporous adsorbent; and/or the adsorbent comprises a chemical adsorbent.

22. The battery according to any one of claims 1-21, wherein a plurality of said treatment modules are provided, the plurality of treatment modules being arranged at intervals sequentially along the treatment channel.

23. The battery according to claim 22, wherein the treatment modules comprise a filtration module, a cooling module, and an adsorption module arranged sequentially along a direction from the venting channel to the external environment.

24. The battery according to claim 22, wherein the treatment modules comprise a first filtration module, a cooling module, an adsorption module, and a second filtration module arranged sequentially along a direction from the venting channel to the external environment, a filtration particle size of the second filtration module being smaller than a filtration particle size of the first filtration module.

25. The battery according to claim 22, wherein the treatment modules comprise a first cooling module, a second cooling module, and an adsorption module arranged sequentially along a direction from the venting channel to an external environment, a temperature of the second cooling module being lower than a temperature of the first cooling module.

26. The battery according to any one of claims 1-25, wherein the treatment mechanism is installed within the box body; or
the treatment mechanism is installed outside the box body.

27. An electrical apparatus, comprising:
the battery according to any one of claims 1-26, the battery being configured to supply electrical energy to the electrical apparatus.
